# EUROPEAN PATENT APPLICATION

(11) **EP 1 956 778 A2**
(43) Date of publication of application: **13.08.2008**
(21) Application number: 07120423.4
(22) Date of filing: 09.11.2007
(51) Int. Cl.: H04L 12/58

(54) **Method and system for reducing the proliferation of electronic messages**

(30) Priority: 08.02.2007 NL 1033356
(71) Applicant: DLB Finance & Consultancy B.V., 4874 LV Etten-Leur (NL); HITD Information Technology B.V., 3181 NM Rozenburg (NL)
(72) Inventor: Benschop, Dirk Leonard, 4874 LV, Etten-Leur (NL); Benschop, Henderik Reinout, 3181 NM, Rozenburg (NL)
(74) Representative: van Looijengoed, Ferry Antoin Theodorus

(57) **Abstract**

The invention relates to a method and system for reducing the proliferation of electronic messages. An electronic message or a portion thereof is transmitted by the server system. An access restriction instruction signal may be received related to the electronic message or the portion thereof. Access to said electronic message is restricted solely in response to receiving the single access restriction instruction signal.

## Description

### FIELD OF THE INVENTION

The invention relates to a method and system for reducing the proliferation of electronic messages. More specifically, the invention relates to a method and system for reducing the proliferation of unsolicited electronic messages in a server system comprising one or more servers for distributing said electronic messages and at least a first user device and a second user device arranged for receiving said electronic messages from said server system.

### BACKGROUND

E-mail spam may generally be defined as unsolicited and/or undesired e-mail messages received by an e-mail recipient.

The amount of e-mail spam messages has dramatically increased over the last decade. The reason for that may be found in the huge number of addressees that can be reached with an e-mail at negligible costs. This combination of factors together with the obligatory delivery of e-mail has made e-mail or, more generally, electronic messaging an attractive communication medium for advertisement of a variety of products and services. Collections of e-mail addresses of people all over the world can be bought from numerous parties at very low cost. E-mail spam messages now account for more than 90% of all e-mail messages transmitted over the internet. As a consequence, electronic resources are wasted to a serious extent.

The increase of the amount of e-mail spam messages has triggered others to provide e-mail spam filters. These filters can be installed both on the side of the server and on the side of the client devices to detect and delete e-mail spam messages without troubling the user. Typically, these filters analyse e-mail messages and match the analysis results against e-mail spam rules in order to recognize e-mail spam. These e-mail spam rules are designed on the basis of known typical characteristics of e-mail spam messages, such as the number of addressees in the e-mail header or the occurrence of certain words in the e-mail body.

However, new forms of spam will not always be recognized and intercepted by these filters, since the e-mail spam rules are not able to recognize these new forms of spam since these spam rules for the new form of e-mail spam message could not yet have been implemented in the spam filter. As a consequence, a continuous race exists between e-mail spammers and spam filter providers, the latter by definition lagging behind the former. On the other hand, solicited and desired e-mail messages are sometimes filtered from the e-mail box of a recipient, because the e-mail message is qualified as spam as dictated by the e-mail spam rule set of the spam filter.

Furthermore, if e-mail spam filters are installed, the filters analyze each individual e-mail message in order to detect e-mail spam messages. As a consequence, message transfer is delayed and resources are wasted.

US 2007/0106734 discloses a system comprising a server and a method for limiting proliferation of unwanted electronic messages. The server can receive a notification from a first user identifying a first electronic message as spam and compare parameters associated with the first electronic message against spam criteria. Responsive to the parameters meeting the spam criteria, other instances of the first electronic message can be blocked from being sent to other users and a credit notification for an account of the first user can be generated. A second user from whom the spam originated can be added to a blocked sender list of the first user. Responsive to identifying a second electronic message generated from the first user to the second user, a correction charge notification can be generated for the account of the first user.

The system and method of US 2007/0106734 require the use of a spam filter and matching spam parameters against spam criteria. Only when spam parameters are identified, users may send spam notifications and other instances may be blocked.

It will be apparent that there is a need in the art for an improved or different method and system for reducing the proliferation of electronic messages, in particular e-mail spam messages.

### SUMMARY OF THE INVENTION

It is an object of the invention to provide a method and system reducing the problems identified in the previous section.

To that end, a method of reducing the proliferation of electronic messages is proposed in a server system comprising one or more servers for distributing the electronic messages. In particular, the server system may be arranged to connect to at least a first user device and a second user device arranged for receiving electronic messages from the server system. The method involves providing at least one electronic message from the server system to the first user device. Alternatively, only a portion of the electronic message is provided to the first user device. The server system subsequently receives an access restriction instruction signal from the first user device related to the electronic message or the portion thereof if the electronic message is identified by the user of the first user device as being a spam message. In response to receiving the single access restriction instruction signal from the first user device, the server system restricts access to the electronic message and/or the portion thereof and/or other electronic messages from the same source for the second user device or a user.

The applicant also proposes a computer program and a carrier containing such a computer program, wherein the computer program contains software code portions capable of, when installed in and executed by an electronic device, performing the method described in the previous paragraph.

Also, a server system is proposed comprising one or more servers adapted for reducing the proliferation of electronic messages. The server system comprises an electronic message receiver arranged for receiving an electronic message or a portion thereof and an electronic message provider arranged for providing said electronic message or said portion thereof. In particular, the server system is arranged for communicating with at least a first and a second user device via a network. The electronic message provider is arranged for providing said electronic message or said portion thereof to said first user device. An access restriction instruction signal receiver is arranged for receiving an access restriction instruction signal from said first user device. The access restrictor is arranged for restricting access to said electronic message (and/or the portion thereof) and/or other (previous or future) electronic messages from the same source for said second user device or a user solely in response to receiving said single access restriction instruction signal from said first user device.

It should be noted that access to the electronic message, the portion thereof or other previous or future electronic messages may be restricted for a user device and/or the user of the user device, the latter option making use of e.g. identification data of the user.

It should also be appreciated that the server system does not necessarily refer to a client-server system. The invention may also be applicable in peer-to-peer networks, such as e.g. used for bittorrent applications, wherein a server or (some) server functionality may be considered to be part of one of more of the user devices participating in the peer-to-peer network. The access restriction instruction signal may then e.g. be broadcast over the peer-to-peer network from one user device to others.

The method and system may be embodied as a web application.

The applicant has realized that the employment of prior art e-mail spam filters is dissatisfactory. The rule set used for recognizing e-mail spam messages is always outdated, despite the regular updates of the rule set provided by the spam filter developers. Ultimately, only human beings will be able to recognize e-mail spam messages. Moreover, the applicant has realized that the improvement of spam filters contributes to the increase of the total amount of spam rather than reducing it. The applicant, therefore, proposes to (solely) use a single access restriction instruction signal from users to detect electronic spam messages and, upon receipt of such an access restriction instruction signal, to restrict access to the corresponding electronic message for other (users of) user devices. The server system thus allows that addressees of an electronic message themselves directly determine what electronic messages are spam messages and that the addressees are subsequently able to determine the access (rights) of other addressees to that message (and possibly other previous and/or future electronic messages from the same source). In other words, the access restriction instruction signal is an order to the server system to restrict access to messages. As an example, the other (users of) user devices may not display or download the electronic message. Using only a single access restriction instruction signal allows for a simple method and system. Harsh consequences of this method and system can be mitigated in various manners, as will be described below in further detail. Spam filters using spam recognition rule sets, spam parameters and criteria may be absent in the server system, at least for those electronic messages for which an access restriction instruction signal has been received.

The embodiments of claims 2, 3 and 22 provide the advantage of establishing a subscriber-only system for electronic message distribution. Since the subscribers are known, e-mail spammers and other abusers of the system can be identified and excluded from participation as a subscriber to the system. Moreover, this embodiment allows identification of users of the server system to exclude users from the system.

The embodiments of claims 4 and 23 prevent the possibility of sniffing the identity of participants to the system and to subsequently participate in the server system under a false identity. Secure communication may be realized by one or more known techniques, such as encrypting data or providing secure network connections.

Conventional e-mail servers duplicate e-mail messages for each addressee. The duplicated e-mail messages are each analyzed by the conventional spam filters. The embodiments of claims 5-9 and 24-28 provide the advantage of limited use of resources. The embodiments also facilitate access restriction to the electronic message. In these embodiments, only small portions (e.g. less than 200 bytes or 100 bytes) characterizing the original electronic message are made available to the addressees. These portions may e.g. include a sender identification, a subject of the electronic message, a date of the electronic message and/or a retrieval key containing information where and/or how to retrieve the complete electronic message. The portions of the electronic message may either be pushed to the servers of the server system or be queried from a particular server of the server system, if needed. Thus, resource consuming processing and network capacity requirements are reduced considerably. Reference is made to a co-pending international patent application of the applicant ("method and system for transmitting an electronic message") filed on the same date as the present application, the contents of the international application being incorporated in the present application by reference in its entirety.

The embodiments of claims 10-12 and 29-31 provide the advantage of enabling users to restrict access to other previous and/or future electronic messages from the same source on the basis of a sender identification of an electronic message for which the access restriction instruction signal was received. Provisions can be made to mitigate the severity of such a measure for the sender on the basis of various parameters, such as the number of offences of the sender. In particular, the applicant proposes to restrict access to other electronic messages for addressees of the electronic message for which the access restriction instruction signal was received in dependence of a communication history between said sender and said addressee from which the access restriction instruction signal was received. As an example, access restriction to other electronic messages may be performed immediately if the sender is unknown to the recipient (e.g. if the sender and recipient have not exchanged electronic messages previously). However, if the sender and recipient know each other, access to other electronic messages is not restricted at once or only partially restricted (but possibly only after several access restriction instruction signals have been received for different electronic messages).

The embodiments of claims 13 and 32 allow for not troubling each user of a user device with the electronic spam message and/or the transmitted portion thereof for which he was an addressee.

The embodiments of claims 14 and 33 provide the possibility of the server system sending a warning signal to the sender of the electronic message for which an access restriction instruction signal was received. This allows for providing the sender with information concerning the consequences of further offences. The consequence of restricting access to the server system can be obtained by the embodiments of claims 15, 16, 34 and 35. The consequence of no longer giving access to the server system may be mitigated. In particular, the applicant proposes to restrict access to the server system for senders of the electronic message for which the access restriction instruction signal was received in dependence of a communication history between said sender and the addressee from which the access restriction instruction signal was received. As an example, access restriction to the server system may be performed immediately if the sender is unknown to a recipient (e.g. if the sender and recipient have not exchanged electronic messages previously) and the recipient issues an access restriction instruction signal. However, if the sender and recipient know each other, access to the server system is not restricted immediately in response to an access restriction instruction signal issued from the user device of a known recipient (but possibly only after access restriction instruction signals have been received for different electronic messages). Reference is made to a co-pending international patent application of the applicant ("Method and system for restricting access to an electronic message system") filed on the same date as the present application, the contents of the international application being incorporated in the present application by reference in its entirety.

Of course, the server system may employ spam filters in addition to the functionality described in the present application for reducing the proliferation of electronic message. However, the server system as defined above operates independently from the operation of these possible spam filters as defined in claims 17 and 36.

The embodiments of claims 18 and 37 allow for the approval for exchange of electronic messages in advance. The approval module may be combined with a mandatory address book that the users should use for indicating addressees of an electronic message.

In an embodiment of the invention, the server system would not comprise an e-mail server. E-mail servers typically only store electronic messages and forward the messages upon request. The embodiment of claim 39 proposes to use programmable databases. Programmable databases allow to program predetermined responses in dependence on the type of request received. For access restriction, the users are allowed to perform an operation (requests) on a database, wherein the response of the database is e.g. the restriction of access for other addressees of the electronic message, the restriction of access to other electronic messages of the same source and/or the exclusion of the sender from the system. Moreover, such a programmable database allows for monitoring relations between several parameters.

The applicant also proposes a user device comprising software code portions and a computer program comprising these software code portions for engaging in one or more steps of the above described method and/or to communicate with the above-described server system.

The applicant also proposes a communication system for exchanging electronic message comprising a server system and the first and second user devices.

It should be noted that the above-embodiments, or aspects thereof, may be combined or isolated. As an example, the method and server system may also allow access restriction for other previous or future electronic messages only, i.e. without restricting access to the particular electronic message for which the one or more access restriction instruction signals were received. In other words, the method and system as defined in claims 10-12 and 29-31 may be applied independently from the subject-matter of claims 1 and 21, respectively.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIG. 1 shows a schematic example of a communication system for exchanging electronic messages;
FIG. 2 shows a schematic example of a server system;
FIG. 3 shows a flow chart depicting steps of a method for reducing the proliferation of electronic messages for the communication system of FIG. 1;
FIG. 4 illustrates another example of a communication system for exchanging electronic messages;
FIG. 5 shows a flow chart depicting steps of a method for reducing the proliferation of electronic messages for the communication system of FIG. 4, and
FIG. 6 shows an exemplary model for a database of a server of a server system according to an embodiment of the invention.

### DETAILED DESCRIPTION OF THE DRAWINGS

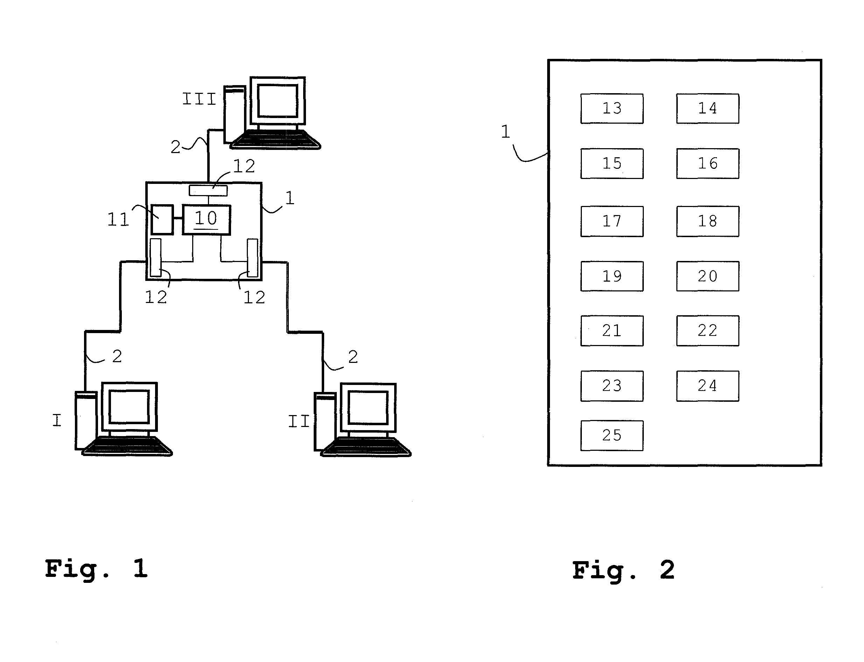

FIGS. 1 and 2 show a server system 1 according to an embodiment of the invention. The server system 1 is connected to a first user device I, a second user device II and a third user device III via network connections 2. The network connections 2 may involve multiple networks, both wired and wireless, and the connection of the user devices I, II, III is not necessarily direct to the server system 1.

The first, second and third user devices I, II, III are arranged for sending and receiving electronic messages, such as e-mail messages, and may be personal computers, mobile communication devices etc.

The server system 1 comprises a processor 10, a memory 11 and a network adapter 12 for communicating with the first, second and third user devices I, II, III. It should be appreciated that the server system 1 is normally capable of connecting to more than the three user devices I, II and III shown in FIG. 1.

The specific functions of the server system 1 are schematically illustrated in FIG. 2 and will now be described in further detail. It should be appreciated that the functions may be largely implemented as software code portions of one or more computer programs executed by the processor 10.

The server system 1 is arranged to receive an electronic message from the third user device III.

The server system 1 comprises an electronic message receiver 13 arranged for receiving an electronic message or a portion thereof and an electronic message provider 14 arranged for providing said electronic message or said portion thereof to the first user device I. The server system 1 also contains an access restriction instruction signal receiver 15 arranged for receiving an access restriction instruction signal from the first user device I related to the electronic message or the portion thereof. Also, the server system 1 comprises an access restrictor 16 arranged for restricting access to the electronic message for the (user of) the second user device II solely in response to receiving the signal access restriction instruction signal from said first user device.

The server system 1 has a register 17 storing a unique login code comprising a user name and a user specific password required for accessing the server system 1 for each user of the user devices I, II and III.

Communication over the network connections 2 is secured. To that end, the server system 1 contains an encryptor 18 for encrypting part or all communications between the server system 1 and the first, second and third user devices I, II, and III. It is noted that alternatively, or in addition thereto, the network connections 2 may be secured. Secure communication prevents or reduces the possibility of sniffing identities of (the users of) the first, second and third user device I, II and III.

The server system 1 may be arranged to make a copy of the electronic message for both the first user device I and the second user device II. However, it may also be that the server system 1 only stores a single copy of the electronic message received from the third user device III.

The server system 1 has an electronic mail deleter 19 for deleting the electronic mail and the copies and/or portions thereof, if any, in response to the access restriction instruction signal from the first user device I.

Furthermore, the server system 1 has a sender identification storage 20 arranged for storing a sender identification of a sender of the electronic message for which the access restriction instruction signal receiver 15 received the access restriction instruction signal, i.e. the identification of the user of the third user device III. If other electronic messages are received or have been received in the past from this user, the access restrictor 16 may use the sender identification to restrict access to these other electronic messages for the second user device II automatically, i.e. without requiring a further access restriction instruction signal for these other electronic messages. Of course, access restrictions may apply also for the (user of the) first user device.

The access restrictor 16 may be arranged such that e.g. access is restricted for the (user of the) second user device II for a particular time period or to a part of the other electronic messages. However, the access restrictor 16 may also prevent downloading of the electronic message to said second user device or prevent display of the electronic message on the second user device II.

In particular, a communication history between a sender and the recipient from which the access restriction instruction signal was received may be taken into account. For example, if the users of the third user device III and the first user device I have not been engaged in electronic message exchange before (i.e. the users don't 'know' each other), the receiving of the access restriction instruction signal may immediately result in preventing other addressees from downloading or displaying other past and future electronic messages. However, if the user of the third user device III and the first user device I have been involved in electronic message exchange in the past (i.e. the users 'know' each other), consequences of the access restriction instruction signal may be less severe. Another example of users 'knowing' each other may be that each of the users have indicated prior to exchange of electronic message that they will accept electronic messages from each other. The server system 1 may contain a counter 21 adapted for counting the number of access restriction instruction signals received for electronic messages of a particular sender and/or for counting the number of times access has been restricted for electronic messages of said sender.

The server system 1 comprises a warning message transmitter 22 adapted for sending a warning message to a sender of the electronic message for which said access restriction instruction signal was received from the first user device I.

The server system 1 also comprises an access restrictor 23 adapted to restrict access to the server system 1 for a sender of the electronic message for which said access restriction instruction signal was received, i.e. the sender using the third electronic device III. Restriction of the access may involve excluding the user of the third device III from further sending and/or receiving electronic messages via the server system 1. However, the server system 1 may comprise an assessor module 24 arranged to restrict access to the server system in dependence on e.g. the number of access restriction instruction signals received for electronic messages of the sender and/or the number of times access has been restricted for electronic messages of the sender.

In particular, a communication history between a sender and the recipient from which the access restriction instruction signal was received may be taken into account. For example, if the users of the third user device III and the first user device I have not been engaged in electronic message exchange before (i.e. the users don't 'know' each other), the receiving of the access restriction instruction signal may immediately result in preventing access to the server system 1 for the sender. However, if the user of the third user device III and the first user device I have been involved in electronic message exchange in the past (i.e. the users 'know' each other), consequences of the access restriction instruction signal may be less severe for the user of the third user device III. Another example of users 'knowing' each other may be that each of the users have indicated prior to exchange of electronic message that they will accept electronic messages from each other.

It should be noted that the server system 1 may contain a spam filter using e.g. a spam rule set, spam parameters and spam criteria for detecting, and possibly restricting access to, electronic spam messages. The server system 1, however, is capable of restricting access to the server system for the (user of the) second device II and/or the sender of the electronic spam message independent from the operation of the spam filter, i.e. solely on the basis of the single access restriction instruction signal.

Finally, the server system 1 contains an approval module 25 adapted to allow exchange of electronic messages between a sender, e.g. the user of the third user device III, and an addressee, e.g. the user of the first user device I, only if both the sender and the addressee have signaled approval for said exchange to the access module 25 in advance. The computer program running on the user devices I and III for sending and receiving electronic messages may e.g. comprise a mandatory address book under the control of the approval module 25. Only by using this address book, a sender may address addressees of the electronic message. Entries in the address book can be made only in response to mutual approval of users to exchange electronic messages.

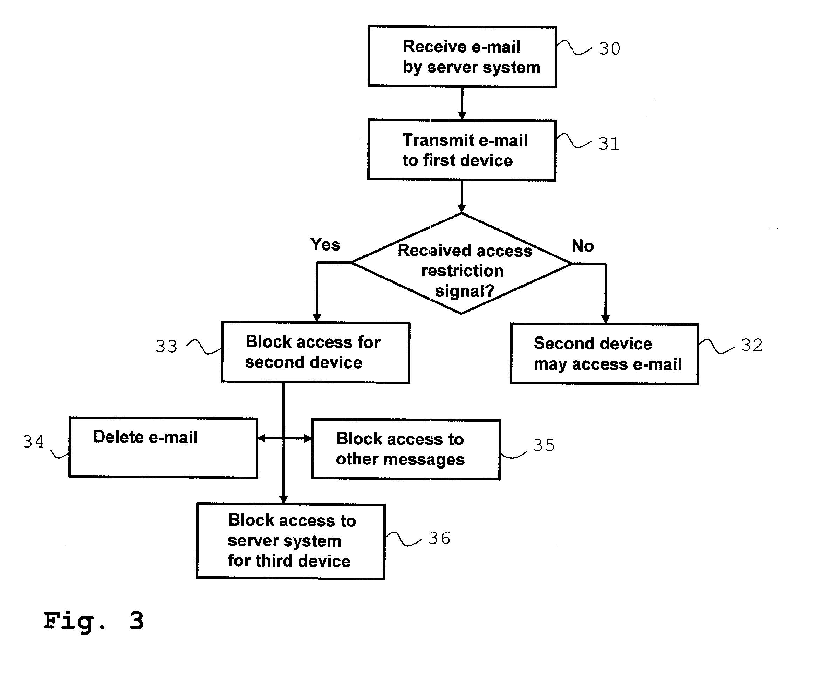

FIG. 3 illustrates a flow chart containing a few steps of the operation of the server system 1 according to an embodiment of the invention.

In a first step 30, the electronic message receiver 13 of the server system 1 receives an electronic message from the third user device III over a secure network connection 2 directed to, amongst others, the users of user devices I and II. The electronic message provider 14 of the server system 1 provides the electronic message to the first user device I in step 31.

If the first reader, e.g. the user of the first user device I, accepts the electronic message as a desired message, an access restriction instruction signal will not be received by the server system 1 in relation to that electronic message. Consequently, the user of the second user device II may also access the electronic message, indicated in step 32.

If the user of the first user device I qualifies the contents of the electronic message as spam, he may transmit an access restriction instruction signal relating to the electronic spam message to the server system 1. The user of the first user device I may e.g. send an access restriction instruction signal by activating a dedicated button on a user interface of the first user device I. The access restriction instruction signal is detected by the access restriction instruction signal receiver 15 of the server system 1. In response to receiving the access restriction instruction signal, the access restrictor 16 restricts access for (a user of) the second user device II to the electronic message, indicated by step 33. The e-mail deleter 19 of the server system 1 may e.g. delete the electronic spam message for which the access restriction instruction signal was received (step 34).

Preferably, the user of the third user device III distributing the electronic spam message is known to the server system 1, e.g. by having stored in register 17 a unique login code comprising a user name and a user specific password required for accessing the server system 1. Using these data, the sender identification storage has stored the identity of the sender of the electronic spam message. If another electronic message is sent (not necessarily an electronic spam message) or has been sent previously, it is determined that for this sender a previous access restriction instruction signal has already been received. Access to these other messages of the sender may therefore be denied as well. Consequently, neither the first user device I nor the second user device II will have access to these other electronic messages (step 35). As such a measure may be rather harsh on the sender of the previous electronic spam message, consequences may be mitigated by allowing the access restrictor 16 to restrict access for the (user of the) second user device II for a particular time period and/or to only a part of the other electronic messages. The assessor module 24 may be used for this purpose. In particular, if the sender and recipient have exchanged electronic messages before, access restriction to other electronic messages may be only performed after a certain number of access restriction instruction signals from a recipient, using counter 21. The counter starts counting however, by receiving the first access restriction instruction signal and, therefore, access restriction is initiated.

Finally, in step 36, the access restrictor 23 restricts access to the server system 1 for (the user of) the third user device III for which the access restriction instruction signal was received. Restriction of the access may involve exempting the user of the third device III from further sending and/or receiving of electronic messages via the server system 1. Again, as such a measure may be harsh on the user of the third user device III, the assessor module 24 may restrict access to the server system 1 in dependence on e.g. the number of access restriction instruction signals received for electronic messages of the sender and/or the number of times access has been restricted for electronic messages of the sender. In particular, if the sender and recipient have exchanged electronic messages before, access restriction to the server system may be only performed after a certain number of access restriction instruction signals from a recipient, using counter 21.

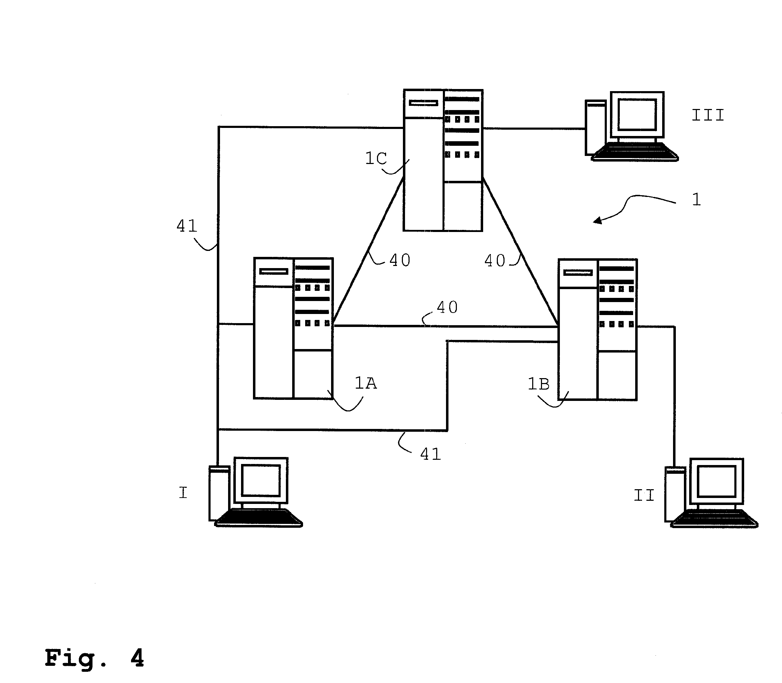

In the system of FIG. 1, the server system 1 comprises a single server. However, the server system 1 may also comprise several servers 1A, 1B, 1C in communicative connection with each other as illustrated in FIG. 4. That is, the servers 1A, 1B and 1C together form a server system 1. The connections 40 connecting the servers 1A, 1B and 1C constitute an inner ring. The first, second and third user devices I, II and III may connect to different servers 1A, 1B and 1C of this inner ring, as shown in FIG. 4, either directly or via further servers (not shown). Each of the first, second and third user devices I, II and III may also access the servers 1B and 1C; 1A and 1C and 1A and 1B, respectively without using the inner ring formed by the connections 40. In FIG. 4, this outer ring, formed by connections 41, is only drawn for the first user device I.

Communication may be secured in both the inner ring and the outer ring. This may be done by encrypting communication over the inner ring and outer ring and/or by making use of secure connections.

Each server 1A, 1B, 1C of the server system 1 may contain the same functional modules 13-25 as described with reference to FIG. 2. However, the functional modules may also be distributed over the various servers 1A, 1B and 1C.

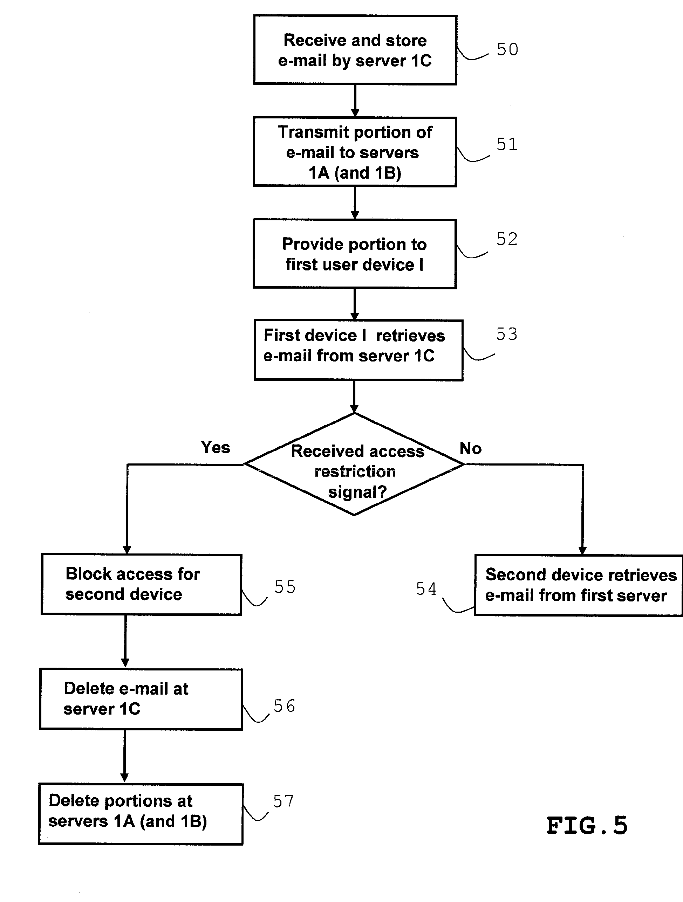

An embodiment of the operation of the system in accordance with FIG. 4 will now be described with reference to FIG. 5.

The user of the third user device III sends an electronic spam message to the server system 1 with the users of user devices I and II as addressees.

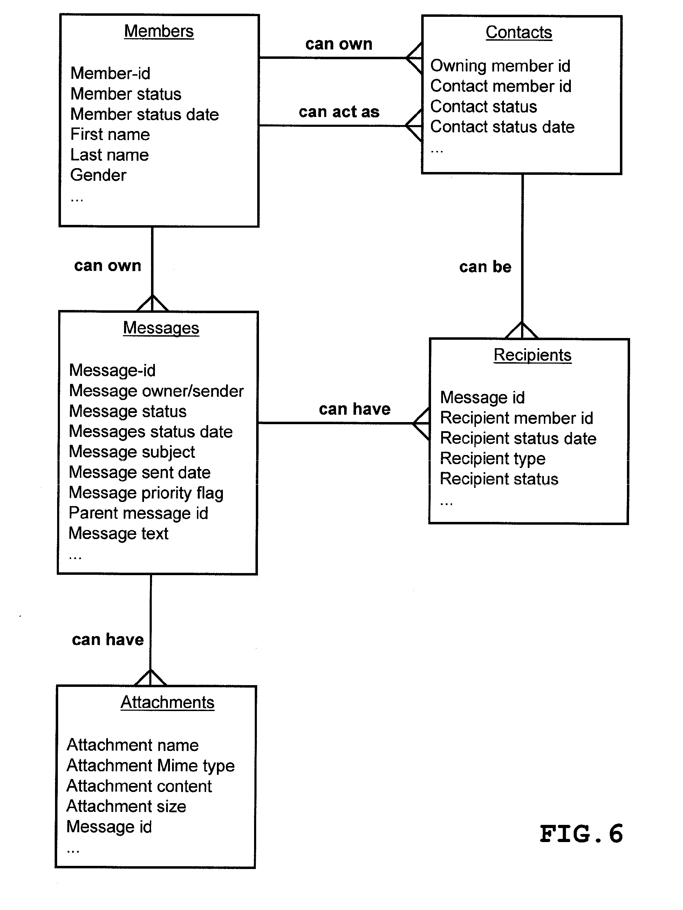

The electronic message receiver 13 of server 1C receives the electronic spam message, possibly divided in fields, and stores the message/fields in the memory 11 in step 50 in a manner further described with reference to FIG. 6. Briefly, instead of storing the electronic message in a conventional e-mail server, individual parts (fields) of the electronic message are stored separately in fields of a database model.

In step 51, the electronic message provider 14 of the third server 1C assembles an electronic message portion with characteristics of the original electronic message. A portion of an electronic message may e.g. comprise one or more fields of the electronic message or a new portion assembled on the basis of characteristics of the electronic message. As an example, the portion of the electronic message contains a sender-field, a subject-field, a retrieval key for retrieving the complete electronic message and possibly a date. The data size of the portion of the electronic message may be less than 200 bytes. A portion provider of the electronic message provider 14 transmits the portion of the electronic message to the first server 1A and the second server 1B using the inner ring of the server system 1. Instead of pushing the portion of the electronic message from the third server 1C to the first and second servers 1A, 1B, the first server 1A may query the portion of the electronic message from the third server 1C upon receiving the request from the first user device I to open the mailbox. Reference is made to the international patent application ("Method and system for transmitting an electronic message") from the same applicant and filed on the same date as the present application, the contents of the international application be incorporated in the present application by reference in its entirety. This latter alternative provides the advantage that even the small portions of the electronic message are only transferred if necessary. The complete electronic message is stored only at server 1C.

Again, it is assumed that the user of the first user device I first opens his mailbox. By doing so, the first server 1A provides the portion of the electronic message to the first user device I in step 52. The electronic message itself may be retrieved in step 53 by the first user device I from the third server 1C over the connections 41 forming the outer ring by selecting the portion of the electronic message provided from the first server 1A.

If the user of the first user device I does not qualify the electronic message as spam, the user of the second device II may access the electronic message as well, e.g. by downloading the electronic message from the third server 1C (step 54).

If the user of the first user device I qualifies the contents of the electronic message as spam, he may transmit an access restriction instruction signal relating to the electronic spam message to the server system 1. The user of the first user device I may e.g. send an access restriction instruction signal by activating a dedicated button on a user interface of the first user device I. The access restriction instruction signal is detected by the access restriction instruction signal receiver 15 of the server 1C. In response to receiving the access restriction instruction signal, the access restrictor 16 of the server 1C restricts access for (a user of) the second user device II to the electronic message, indicated by step 55. The e-mail deleter 19 of the server 1C may e.g. delete the portion of the electronic spam message at the second server 1B, such that the user of the second device II has no access to the electronic spam message at the third server 1C. Moreover, the e-mail deleter 19 may delete the electronic spam message itself from the memory 11 of the third server 1C as well as the portion of the electronic message from the first server 1A. These measures are indicated at steps 56 and 57. The deletion of the (portion(s) of) the electronic message is instructed over the inner ring of FIG. 4.

As mentioned above, the server system 1 stores only a single copy of the electronic message (at server 1C) independent of the number of addressees. The addressees are notified of the electronic message by means of portions characterizing the electronic message of small size. This saves a large amount of resources. However, the server system 1 may provide multiple copies of the electronic message if such an approach proves to be more effective. The number of copies of the electronic message is less than the number of addressees of said electronic message.

As for the embodiment of FIGS. 1 and 3, the user of the third user device III distributing the electronic spam message may be known to the server system 1, e.g. by having stored in register 17 of the third server 1C a unique login code comprising a user address and a user specific password required for accessing the server system 1. Using these data, the sender identification storage 20 has stored the identity of the sender of the electronic spam message. If an other electronic message is sent or has been sent (not necessarily an electronic spam message), it is determined that for this sender a previous access restriction instruction signal has already been received. Access to these other messages of the sender may therefore be denied for the users of both devices I and II. Consequently, neither the first user device I nor the second user device II will have access to these other electronic messages. As such a measure may be rather harsh on the sender of the previous electronic spam message, consequences may be mitigated by allowing the access restrictor 16 at the third server 1C to restrict access for the (user of the) second user device II for a particular time period and/or to only a part of the other electronic messages. In particular, a communication history for the sender may be used for determining the consequences.

It should be appreciated that the register 17 may be shared by multiple servers 1A, 1B and 1C, as well as the sender identification storage 20 for senders of previous electronic spam messages.

Also, as previously described for the embodiment of FIGS. 1 and 3, the server system 1 may be triggered, using the access restriction instruction signal, to block access for the user of the third user device to the server system 1 (including the milder variants) or the send a warning message.

The servers 1A, 1B and 1C of the server system 1 are preferably not conventional e-mail servers. Such e-mail servers store e-mail messages, duplicate the e-mail messages to the number of addressees and provide the e-mail messages upon request for a particular one of those messages. The functionality of these mail servers is rather limited.

The applicant proposes to use one or more databases, such as Oracle^{®} databases, for which the response can be programmed in dependence of e.g. the request made to the database. Incoming electronic messages are analyzed as or received in predetermined parts, which are stored in fields of the database(s). As an example, the header of a conventional e-mail is stored in separate fields, some of which are depicted in the data model of FIG. 6.

The methods as described above may be performed in a subscriber-only system, wherein the details of subscribers/participants are known and wherein the subscribers have agreed to comply to particular general conditions. The members of the system have a place in the data model of FIG. 6.

The use of databases for the servers 1A, 1B and 1C allows monitoring relations between different fields, as shown in FIG. 6.

The functionality as described above can be obtained using the database model of FIG. 6.

As an example, if a user issues an access restriction instruction signal, the recipient status and recipient status date are updated. Since a single access restriction instruction signal is sufficient for restricting access to the electronic message for other recipients and to restrict access to the server system 1 for a sender, this status will propagate to the message status and the member status, respectively. By adding a messages status date and a member status data to the data model, flexibility is obtained.

Fields of the box "messages" may be part of the portion of the electronic message that is pushed or queried in the server system. Examples include the message owner/sender, the message subject and the message sent date. The message id relates to the retrieval key for retrieving the complete electronic message.

It should be noted that when a mandatory address book for addressing addressees of the electronic message is not used, the box "contacts" may be eliminated in the database model and a link can be established directly from the box "members" to the box "recipients".

The server system 1 may contain an approval module 25. it is noted that the below described operation of the approval module may be applied independently of the method described above, in particular with respect to the access restriction instruction signal. As such, the server system 1 may be so configured for all the participants that any and all information addressed to them as participants cannot reach them and that, prior to the first communication within the system between two participants A and B, the two participants A and B will first have to go through an arrangement/approval protocol.

The approval module 25 in its variants may be applied in combination with a mandatory address book for addressing addressees of an electronic message.

## Claims

1. A method of reducing the proliferation of electronic messages in a server system comprising one or more servers for distributing said electronic messages to at least a first user device and a second user device, the method comprising the steps by said server system of:
- providing at least one electronic message or a portion thereof to said first user device;
- receiving an acess restriction instruction signal related to said electronic message or said portion thereof from said first user device, and
- restricting access to said electronic message or said portion thereof for said second user device solely in response to receiving said single acess restriction instruction signal from said first user device.

2. The method according to claim 1, further comprising the step of receiving said electronic message by said server system from a third user device and wherein users of said first, second and third user devices are centrally registered.

3. The method according to claim 2, wherein each of said users is provided with a unique login code comprising a user address and a user-specific password for accessing the server system.

4. The method according to one or more of the preceding claims, further comprising the step by said server system of receiving and transmitting said electronic message and possibly said access restriction instruction signal in a secured manner.

5. The method according to one or more of the preceding claims in a server system comprising at least a first server and a second server, further comprising the steps of:
- receiving said electronic message at said first server;
- storing said electronic message at said first server
- transmitting a portion of said electronic message to said second server;
- receiving said portion of said electronic message at said second server;
- providing said portion of said electronic message from said second server to said first user device;
- providing said electronic message from said first server to said first user device in response to selecting said portion of said electronic message.

6. The method according to claim 5, further comprising the step of receiving said access restriction instruction signal at said first server.

7. The method according to claim 5 or 6, further comprising the step of providing multiple copies of said electronic message, wherein the number of copies of said electronic message is less than the number of addressees of said electronic message.

8. The method according to claim 5 or 6, further comprising the step of storing said electronic message only once at said first server.

9. The method according to claim 5 or 6, further comprising the step of deleting the electronic message at the first server and/or the portion of the electronic message at the second server in response to said access restriction instruction signal.

10. The method according to one or more of the preceding claims, further comprising the steps by said server system of:
- receiving said electronic message
- receiving said single access restriction instruction signal from said first user device for said electronic message;
- storing a sender identification of a sender of said electronic message for which said access restriction instruction signal was received;
- receiving or having received one or more other electronic messages from said sender;
- restricting access to at least one of said other electronic messages for at least one of said first user device and said second user device using said sender identification.

11. The method according to claim 10, wherein said step of restricting access to said other electronic messages includes at least one of the following steps:
- restricting access to said other electronic messages for a particular time period;
- restricting access to a part of said other electronic messages; and
- restricting access to said other electronic messages for addressees of said other electronic messages in dependence of a communication history between said sender and said addressee from which said single access restriction instruction signal has been received.

12. The method according to claim 11, wherein said time period or said part is determined by at least one of the following:
- the number of access restriction instruction signals received for electronic messages of a particular sender;
- the number of times access has been restricted for electronic messages of said sender.

13. The method according to one or more of the preceding claims, wherein said step of restricting said access for said second user device by said server system comprises at least one of the following steps:
- preventing downloading of said electronic message or said portion thereof to said second user device;
- preventing display of said electronic message or said portion thereof on said second user device.

14. The method according to one or more of the preceding claims, further comprising the step of transmitting a warning message to a sender of said electronic message for which said single access restriction instruction signal was received.

15. The method according to one or more of the preceding claims, further comprising the step of restricting access to said server system for a sender of said electronic message for which said access restriction instruction signal was received.

16. The method according to claim 15, wherein said step of restricting access is dependent on at least one of the following:
- the number of access restriction instruction signals received for electronic messages of a particular sender;
- the number of times access has been restricted for electronic messages of said sender; and
- a communication history between said sender and the addressee from which said single access restriction instruction signal was received.

17. The method according to one or more of the preceding claims, wherein said method steps are performed independently from the operation of a spam filter, said spam filter using a spam rule set to detect electronic spam messages received by said system.

18. The method according to one or more of the preceding claims, wherein said server system comprises an approval module allowing exchange of electronic messages between a sender and an addressee only if both the sender and the addressee have signaled approval for said exchange to said access module in advance.

19. A computer program comprising software code portions adapted for, when installed in and executed by an electronic system, performing the method according to claims 1-18.

20. A carrier containing the computer program of claim 19.

21. A server system comprising one or more servers adapted for reducing the proliferation of electronic messages, wherein said server system is arranged for communicating with at least a first and a second user device via a network, wherein said server system comprises:
- an electronic message receiver arranged for receiving an electronic message or a portion thereof;
- an electronic message provider arranged for providing said electronic message or said portion thereof to said first user device;
- an access restriction instruction signal receiver arranged for receiving an access restriction instruction signal related to said electronic message or said portion thereof from said first user device; and
- an access restrictor arranged for restricting access to said electronic message for said second user device solely in response to receiving said single access restriction instruction signal of said first user device.

22. The server system according to claim 21, wherein the server system comprises a register storing a unique login code comprising a user address and a user specific password required for accessing the server system.

23. The server system according to claim 21 or 22, wherein said server system is further arranged for receiving said electronic message from a third user device and wherein said server system comprises means for securing communication with said first, second and third user device.

24. The server system according to one or more of the claims 21-23, wherein said server system comprises at least a first server and a second server, wherein
said first server comprises:
- an electronic message receiver for receiving said electronic message;
- storage means for storing said electronic message;
- a portion provider adapted for providing a portion of said electronic message on the basis of said received electronic message;
- a transmitter for transmitting said portion of said electronic message to said second server, and
- a transmitter for transmitting said electronic message to said first user device in response to receiving a request for said electronic message from said first user device;
and said second server comprises:
- an electronic message portion receiver arranged for receiving said portion of said electronic message from said transmitter of said first server;
- means for providing said first user device with said portion of said electronic message.

25. The server system according to claim 24, wherein said first server further comprises an access restriction instruction signal receiver arranged for receiving said access restriction instruction signal from said first user device.

26. The server system according to one or more of the claims 21-25, wherein said server system is arranged for providing multiple copies of said electronic message, wherein the number of copies of said electronic message is less than the number of addressees of said electronic message.

27. The server system according to one or more of the claims 24-26, wherein the system is arranged such that only the storage means of the first server stores said electronic message.

28. The server system according to one or more of the claims 24-27, wherein the server system comprises an electronic message deleter and an electronic message portion deleter arranged for deleting the electronic message at the first server and the electronic message portion at the second server in response to said access restriction instruction signal.

29. The server system according to one or more of the claims 21-28, wherein said system further comprises a sender identification storage arranged for storing a sender identification of a sender of said electronic message for which said access restriction instruction signal receiver received said single access restriction instruction signal, wherein said electronic message receiver is arranged to receive or have received other electronic messages and wherein said access restrictor is adapted for restricting access to at least one of said other electronic messages for at least one or said first user device and said second user device using said sender identification.

30. The server system according to claim 29, wherein said access restrictor is further adapted to perform at least one of the steps:
- restricting access to said other electronic messages for a particular time period;
- restricting access to a part of said other electronic messages.
- restricting access to said other electronic messages for addressees of said other electronic messages in dependence of a communication history between said sender and said user of said first user device from which said single access restriction instruction signal has been received.

31. The server system according to claim 30, wherein said server system further comprises at least one of:
- a counter adapted for counting the number of access restriction instruction signals received for electronic messages of a particular sender, and
- a counter adapted for counting the number of times access has been restricted for electronic messages of said sender.

32. The server system according to one or more of the claims 21-31, wherein said access restrictor is arranged to prevent at least one of the following:
- downloading of said electronic message or said portion thereof to said second user device;
- display of said electronic message or said portion thereof on said second user device.

33. The server system according to one or more of the claims 21-32, wherein said server system further comprises a warning message transmitter adapted for sending a warning message to a sender of said electronic message for which said access restriction instruction signal was received.

34. The server system according to one or more of the claims 21-33, further comprising an access restrictor adapted to restrict access to said server system for a sender of said electronic message for which said access restriction instruction signal was received.

35. The server system according to claim 34, further comprising an assessor module arranged to restrict access to the server system in dependence on at least one of the following:
- the number of access restriction instruction signals received for electronic messages of a particular sender;
- the number of times access has been restricted for electronic messages of said sender; and
- a communication history between said sender and said user of said first user device from which said single access restriction instruction signal was received.

36. The server system according to one or more of the claims 21-35, wherein said server system is adapted to operate independently from a spam filter, said spam filter using a spam rule set for detecting electronic spam messages.

37. The server system according to one or more of the claims 21-36, further comprising an approval module adapted to allow exchange of electronic messages between a sender and an addressee only if both the sender and the addressee have signaled approval for said exchange to said access module in advance.

38. The server system according to one or more of the claims 21-37, wherein one or more of said servers comprise a programmable database.

39. A user device comprising software code portions adapted to engage in the method according to one or more of the claims 1-18 and/or to communication with the server system according claims 21-48.

40. A computer program for the user device of claim 39 comprising software code portions adapted for, when installed on and executed by a processor of the user device, to perform one or more steps of the method of claims 1-18 and or to communicate with the server system of claims 21-38.

41. A communication system for exchanging electronic messages comprising a server system according to one or more of the claims 21-38 and at least the first user device and a second user device.
